# DEMANDE DE BREVET EUROPEEN

(11) **EP 1 564 263 A1**
(43) Date de publication de la demande: **17.08.2005**
(21) Numéro de dépôt: 05290118.8
(22) Date de dépôt: 20.01.2005
(51) Int. Cl.: C09D 5/03, A47L 15/50

(54) **Poudre à base de polymère thermoplastique et son utilisation pour obtenir un revêtement rugueux**

(30) Priorité: 30.01.2004 US 540464 P
(71) Demandeur: ARKEMA, 92800 Puteaux (FR)
(72) Inventeur: Audenaert, Marc, 27300 Bernay (FR); Fouquet, Michel, 27300 Bernay (FR); Letellier-Delahaye, Isabelle, 27130 Bourg Achard (FR); Vitoux, Alain, 27300 Bernay (FR)
(74) Mandataire: Neel, Henry

(57) **Abrégé**

La présente invention concerne l'utilisation d'une poudre pour revêtir des objets, cette poudre comprenant en volume 99 à 65% d'au moins un polymère thermoplastique et 1 à 35% de billes d'un matériau conservant sa forme initiale aux températures de mise en oeuvre pour obtenir le revêtement.

Cette poudre peut être préparée par simple mélange à sec (dry blend) des constituants. L'invention concerne aussi cette poudre.

L'invention concerne en particulier des revêtements rugueux obtenus à partir de poudres pour panier de lave-vaisselle contenant des billes de verre ou céramique pleines ou creuses ajoutées en mélange à sec à la poudre de polyamide. En raison de leur rugosité, ces revêtements améliorent le séchage en lave-vaisselle. L'addition de billes de verre permet en outre d'améliorer la qualité de la fluidisation.

## Description

### Domaine de l'invention

La présente invention concerne une poudre à base de polymère thermoplastique et son utilisation pour revêtir des objets. Elle est utile dans les procédés de recouvrement d'un objet par un film provenant de la fusion d'une mince couche de poudre préalablement déposée sur l'objet. Plus précisément la poudre de l'invention est un mélange de polymère thermoplastique et de billes d'un matériau conservant sa forme initiale aux températures de mise en oeuvre pour obtenir le revêtement (par exemple le verre et la céramique).

Il existe actuellement à l'échelle industrielle plusieurs procédés de recouvrement d'un objet par fusion d'une poudre.

Le premier procédé est le poudrage électrostatique, il consiste à charger la poudre d'électricité statique et à la mettre en contact avec l'objet à recouvrir relié à un potentiel zéro. Par exemple la poudre est injectée dans un pistolet électrostatique qui va charger la dite poudre par effet Corona (aussi appelé effet couronne), par triboélectrification ou par combinaison des deux. La poudre ainsi chargée est projetée sur l'objet à recouvrir relié à un potentiel zéro. Selon une autre forme de poudrage électrostatique on trempe l'objet relié à un potentiel zéro dans un lit fluidisé de poudre chargée. A l'intérieur du lit fluidisé se trouve de la poudre dont on veut recouvrir l'objet. Cette poudre est sous la forme de particules solides de faible taille, par exemple entre 0.01 et 1 mm, de forme quelconque, qui sont en état de fluidisation à l'intérieur du lit en présence d'air ou de tout autre gaz. La poudre peut être chargée par des électrodes par effet corona ou par tout dispositif, disposé à l'intérieur et/ou à l'extérieur du lit fluidisé, pour la charger par effet triboélectrique. L'objet recouvert de poudre est ensuite placé dans un four à une température suffisante pour assurer un revêtement par fusion de la poudre provoquant la filmification. Par exemple pour une poudre de polyamide 11 il suffit de chauffer à 220°C.

Le deuxième procédé consiste à préchauffer l'objet à recouvrir à une température supérieure à la température de fusion de la poudre. Une fois chaud, l'objet est immédiatement immergé dans un lit fluidisé de la poudre, la poudre fond au contact de l'objet chaud et filmifie. Un recouvrement solide est ainsi assuré. Ce procédé est aussi appelé "procédé de trempage en lit fluidisé".

La peinture poudre de la présente invention est utile dans les deux procédés.

### L'art antérieur et le problème technique

L'invention se rapporte au domaine des revêtements en polymère thermoplastique (avantageusement en polyamide) haute performance assurant une protection anticorrosion des objets et avantageusement des objets métalliques. Elle concerne plus particulièrement les poudres (désignées aussi par "peintures poudres") appliquées par un procédé de trempage en lit fluidisé. L'invention concerne une composition de poudre en polymère thermoplastique permettant d'obtenir un revêtement rugueux et donc hydrophile. Ceci est particulièrement utile pour les paniers de lave-vaisselle, améliorant ainsi les caractéristiques de séchage du lave-vaisselle.

Il est connu qu'une surface hydrophile augmente l'étalement des gouttes d'eau qui entrent en contact avec cette surface. Cette caractéristique permet de former un film d'eau sur la surface avec une quantité d'eau plus faible, ce qui favorise l'écoulement de l'eau. Par ailleurs, une goutte d'eau isolée s'évapore plus vite lorsqu'elle est en contact avec une surface hydrophile. Il est connu aussi que l'étalement d'une goutte d'eau sur une surface est d'autant plus grand que la surface est rugueuse. Une surface plus rugueuse peut donc être assimilée à une surface plus hydrophile.

La demande de brevet **JP1075539** publiée le 22 mars 1989 décrit l'augmentation de la mouillabilité d'une surface en projetant sur celle ci des particules dures (sablage) puis en la traitant par UV ou l'ozone. Le brevet **DE19842095** décrit l'amélioration de l'égouttage des paniers de lave vaisselle en les traitant par plasma. Le brevet **DE4113211** décrit un procédé similaire. Le brevet **US5482768** décrit un revêtement mouillable d'un substrat constitué de deux couches dans lequel la couche en contact avec le substrat est formée d'un polymère résistant en température et contenant des particules de polymère qui se décomposent par chauffage. Le brevet **EP0772514** décrit un objet à revêtement rugueux comprenant des élévations et des dépressions, la distance entre les élévations est comprise entre 5 et 200 µm et la hauteur de ces élévations est comprise entre 5 et 100 µm. Les élévations sont en polymère hydrophobe. Le brevet **US 5882739** concerne des paniers de lave vaisselle et décrit l'amélioration de la cinétique de séchage après un traitement plasma ou un traitement par sulfonation du revêtement plastique. Le brevet **DE 19917151** propose d'obtenir une surface rugueuse de paniers de lave vaisselle de différentes façons:
- En modifiant les paramètres de mise en oeuvre (temps-température) pour créer des infondus,
- En mélangeant des particules de matière plastique de taille granulométrique différente,
- En appliquant une peinture permettant de rendre la surface rugueuse,
- En incorporant des charges (Ti02, Si02, Oxyde de Magnesium, ou des mélanges de cristaux) dans le revêtement avant la solidification complète du revêtement (état plastifié).
La demande de brevet **US 20010032825** décrit un revêtement qui étale l'eau à sa surface, de rugosité Rz supérieure ou égale à 5 microns, en vue d'évaporer l'eau plus rapidement. Aucun moyen d'obtenir cette rugosité n'est décrit.

Les brevets **US 5882739** et **DE 19917151** font appel à un procédé en deux étapes :
- première étape : l'application d'un revêtement plastique
- deuxième étape : la modification de la surface du revêtement soit par traitement chimique pour la rendre plus hydrophile, soit par incorporation de charges minérales avant solidification complète du revêtement.
La demande de brevet **US 20010032825** ne fait que préciser qu'il faut une rugosité Rz supérieure à 5 microns pour que les propriétés d'écoulement de l'eau soient améliorées, sans expliquer comment on y arrive. Par ailleurs, aucune indication ne permet de comprendre pourquoi il est nécessaire que Rz soit supérieur ou égal à 5 microns.

On a maintenant trouvé un moyen beaucoup plus simple pour obtenir un revêtement rugueux. Il suffit d'ajouter des billes de verre ou de céramique dans la poudre de polymère thermoplastique avant d'effectuer le revêtement du panier de lave vaisselle et ensuite de faire le revêtement comme si on utilisait de la poudre de polymère thermoplastique ordinaire.

### Brève description de l'invention

La présente invention concerne l'utilisation d'une poudre pour revêtir des objets, cette poudre comprenant en volume 99 à 65% d'au moins un polymère thermoplastique et 1 à 35% de billes d'un matériau conservant sa forme initiale aux températures de mise en oeuvre pour obtenir le revêtement.

Cette poudre peut être préparée par simple mélange à sec (dry blend) des constituants.

L'invention concerne aussi cette poudre. C'est à dire que l'invention concerne une poudre comprenant en volume 99 à 65% d'au moins un polymère thermoplastique et 1 à 35% de billes d'un matériau conservant sa forme initiale aux températures de mise en oeuvre pour obtenir le revêtement d'un objet par fusion du polymère thermoplastique provoquant sa filmification.

La présente invention concerne aussi un procédé de recouvrement d'un objet par un film provenant de la fusion d'une mince couche de poudre dans lequel :
(a) on dispose de la poudre précédente électrisée, cette poudre ayant été chargée par tout moyen,
(b) on approche l'objet de la poudre ou bien on met en contact l'objet et la poudre, l'objet étant relié à un potentiel zéro ou suffisant pour le recouvrir de poudre,
(c) on place ensuite l'objet recouvert de la poudre dans un four à une température suffisante jusqu'à obtenir le film de revêtement par fusion de la poudre.

La présente invention concerne aussi un procédé de recouvrement d'un objet par un film provenant de la fusion d'une mince couche de poudre dans lequel :
(a) on dispose de la poudre précédente en lit fluidisé,
(b) on chauffe l'objet à recouvrir à une température suffisante pour que la poudre fonde à son contact,
(c) on trempe l'objet dans le lit fluidisé un temps suffisant pour qu'il se recouvre de poudre,
(d) on retire l'objet du lit fluidisé. On utilise avantageusement ce procédé.

L'invention concerne aussi les objets ayant un revêtement rugueux obtenu par l'utilisation des poudres précédentes.

La présente invention ne fait appel à aucun traitement de surface, ni à aucun procédé de modification du revêtement initial obtenu (tel que peinture du revêtement initial, incorporation de charges pendant le refroidissement du revêtement initial). La composition de poudre de l'invention permet d'obtenir un revêtement de panier de lave-vaisselle rugueux en une seule étape.

L'invention concerne en particulier des revêtements rugueux obtenus à partir de poudres pour panier de lave-vaisselle contenant des billes de verre ou céramique pleines ou creuses ajoutées en mélange à sec à la poudre de polymère thermoplastique. En raison de leur rugosité, ces revêtements améliorent le séchage en lave-vaisselle. L'addition de billes de verre permet en outre d'améliorer la qualité de la fluidisation.

### Description détaillée de l'invention

**S'agissant du polymère thermoplastique** on utilise par exemple le PVC, les polyoléfines et les polyamides. On utilise avantageusement les polyamides. On entend par polyamide les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame;
- d'un ou plusieurs sels ou mélanges de diamines telles l'hexaméthylène-diamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ; ou des mélanges de plusieurs de ces monomères ce qui conduit à des copolyamides. On utilise avantageusement des polyamides aliphatiques.

Les polyamides aliphatiques peuvent être choisis parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12.

A titre d'exemple de polyamides aliphatiques résultant de la condensation d'une diamine aliphatique ayant de 6 à 12 atomes de carbone et d'un diacide aliphatique ayant de 9 à 12 atomes de carbone on peut citer :
le PA 6-12 résultant de la condensation de l'hexaméthylène diamine et de l'acide 1,12-dodecanedioïque,
le PA 9-12 résultant de la condensation de la diamine en C9 et de l'acide 1,12-dodecanedioïque,
le PA 10-10 résultant de la condensation de la diamine en C10 et de l'acide 1,10-decanedioïque,
le PA 10-12 résultant de la condensation de la diamine en C9 et de l'acide 1,12-dodecanedioïque.

Quant aux copolyamides 11/12 ayant soit plus de 90% de motifs 11 soit plus de 90% de motifs 12, ils résultent de la condensation de l'acide amino 1-undecanoïque avec le lauryllactame (ou l'alpha omega amino acide en C12).

On utilise avantageusement le PA 11 et le PA 12.

**S'agissant des billes du matériau** c'est tout matériau conservant sa forme initiale aux températures de mise en oeuvre pour obtenir le revêtement. On peut citer à titre d'exemple les polymères reticulés, le verre et la céramique. C'est avantageusement du verre ou de la céramique. Les billes peuvent être creuses ou pleines et leur taille est avantageusement comprise entre 20 et 200 µm.

**S'agissant de la préparation de la poudre** elle peut être effectuée par simple mélange à sec (dry blend) des constituants. La poudre de polymère thermoplastique a une granulométrie pouvant varier de 10 à 1000 µm. L'expression "mélange à sec" est utilisée par opposition à un mélange dans lequel le polymère thermoplastique est à l'état fondu. On peut utiliser les mélangeurs habituels des produits en poudre, par exemple le Henschel®. Le mélange se fait à température et pression normale. La durée de mélange doit être suffisante pour que le mélange soit homogène.

La proportion en volume des billes du matériau est avantageusement comprise entre 5 et 20% pour respectivement 95 et 80% de polymère thermoplastique.

La poudre de l'invention peut comprendre aussi des additifs anti UV, des antioxydants, des colorants, des pigments, des ignifugeants, des bactericides, etc ... Ces produits sont de préférene incorporés dans le polymère thermoplastique avant qu'il soit réduit en poudre.

**S'agissant des objets qu'on veut revêtir** à titre d'exemple on peut citer les objets métalliques. A titre d'exemple de métaux on peut citer l'aluminium, les alliages d'aluminium, l'acier et ses alliages. L'invention est utile pour les paniers de lave vaisselle. Éventuellement un pré traitement de surface est effectué sur l'objet avant de le recouvrir de poudre. Il s'agit des pré traitements classiques utilisés dans l'industrie du revêtement: phosphatage, dégraissage, grenaillage.

**L'invention concerne aussi cette poudre.** La composition de cette poudre, la nature et les proportions de ses constituants sont celles décrites ci dessus pour son utilisation.

### Exemples

Les exemples suivants illustrent l'invention sans en limiter la portée.

### Exemple 1:

On mélange à sec au moyen d'un outil mélangeur Henschel 1000 parts (en poids) d'une poudre PA11 blanche utilisée pour revêtir des paniers de lave-vaisselle et 150 parts de billes de verre pleines de densité 2,5 et de taille telle que 100% des billes de verre passent au travers d'un tamis de 125 microns et 0 à 10% passent au travers d'un tamis de 53 microns (Poudre PA11 modifiée A). Cette proportion correspond environ à 7% en volume de billes.

La poudre est mise en fluidisation et un panier de lave vaisselle préalablement chauffé est trempé dans la poudre fluidisée. Le panier est chauffé et refroidi de la même façon que pour le revêtement obtenu à partir de la poudre de PA11 (ne contenant pas de billes de verre). La rugosité du revêtement est mesurée en utilisant un Perthometer. Les résultats sont rassemblés dans le tableau 1.

**Tableau 1**

| Revêtement obtenu | Rugosité Rz (µm) |
|---|---|
| Poudre PA11 | 2+/-0,5 |
| Poudre PA11 modifiée A | 4,5 +/-0,5 |

### Exemple 2 :

On mélange à sec au moyen d'un outil mélangeur Henschel 1000 parts (en poids) d'une poudre PA11 blanche utilisée pour revêtir des paniers de lave-vaisselle et 300 parts de billes de verre pleines de densité 2,5 et de taille telle que 100% des billes de verre passent au travers d'un tamis de 125 microns et 0 à 10% passent au travers d'un tamis de 53 microns (poudre PA11 modifiée B). Cette proportion correspond environ à 15% en volume de billes. La poudre est mise en fluidisation et un panier de lave vaisselle préalablement chauffé est trempé dans la poudre fluidisée. Le panier est chauffé et refroidi de la même façon que pour le revêtement obtenu à partir de la poudre de PA11 (ne contenant pas de billes de verre). La rugosité du revêtement est mesurée en utilisant un Perthometer. Les résultats sont rassemblés dans le tableau 2.

**Tableau 2**

| Revêtement obtenu | Rugosité Rz (µm) |
|---|---|
| Poudre PA11 | 2+/-0,5 |
| Poudre PA11 modifiée B | 17+/-2 |

En utilisant une méthode telle que celle qui est décrite dans la norme CEI/IEC 436 (méthodes de mesure de l'aptitude à la fonction des lave-vaisselle électriques), on peut démontrer que l'utilisation des compositions de poudre citées dans ces deux exemples pour revêtir des paniers de lave-vaisselle permet d'améliorer le séchage de la vaisselle au cours d'un cycle de lavage.

L'utilisation de billes de verre sphériques améliore également la fluidisation de la poudre, ce que l'homme de l'art peut apprécier de manière qualitative.

## Revendications

1. Utilisation d'une poudre pour revêtir des objets, cette poudre comprenant en volume 99 à 65% d'au moins un polymère thermoplastique et 1 à 35% de billes d'un matériau conservant sa forme initiale aux températures de mise en oeuvre pour obtenir le revêtement.

2. Utilisation selon la revendication 1 dans laquelle le polymère thermoplastique est choisi parmi le PA 11 et le PA 12.

3. Utilisation selon l'une quelconque des revendications précédentes dans laquelle la poudre de polymère thermoplastique a une granulométrie comprise entre 10 et 1000 µm.

4. Utilisation selon l'une quelconque des revendications précédentes dans laquelle la taille des billes du matériau conservant sa forme initiale aux températures de mise en oeuvre pour obtenir le revêtement est comprise entre 20 et 200 µm.

5. Utilisation selon l'une quelconque des revendications précédentes dans laquelle le matériau conservant sa forme initiale aux températures de mise en oeuvre pour obtenir le revêtement est choisi parmi le verre et la céramique.

6. Utilisation selon l'une quelconque des revendications précédentes dans laquelle La proportion en volume des billes du matériau est avantageusement comprise entre 5 et 20% pour respectivement 95 et 80% de polymère thermoplastique.

7. Utilisation selon l'une quelconque des revendications précédentes dans laquelle l'objet à revêtir est un panier de lave vaisselle.

8. Procédé de recouvrement d'un objet par un film provenant de la fusion d'une mince couche de poudre comprenant en volume 99 à 65% d'au moins un polymère thermoplastique et 1 à 35% de billes d'un matériau conservant sa forme initiale aux températures de mise en oeuvre pour obtenir le revêtement dans lequel :
(a) on dispose de la poudre précédente électrisée, cette poudre ayant été chargée par tout moyen,
(b) on approche l'objet de la poudre ou bien on met en contact l'objet et la poudre, l'objet étant relié à un potentiel zéro ou suffisant pour le recouvrir de poudre,
(c) on place ensuite l'objet recouvert de la poudre dans un four à une température suffisante jusqu'à obtenir le film de revêtement par fusion de la poudre.

9. Procédé de recouvrement d'un objet par un film provenant de la fusion d'une mince couche de poudre comprenant en volume 99 à 65% d'au moins un polymère thermoplastique et 1 à 35% de billes d'un matériau conservant sa forme initiale aux températures de mise en oeuvre pour obtenir le revêtement dans lequel :
(a) on dispose de la poudre précédente en lit fluidisé,
(b) on chauffe l'objet à recouvrir à une température suffisante pour que la poudre fonde à son contact,
(c) on trempe l'objet dans le lit fluidisé un temps suffisant pour qu'il se recouvre de poudre,
(d) on retire l'objet du lit fluidisé.

10. Objets ayant un revêtement rugueux obtenus par l'utilisation des poudres selon l'une quelconque des revendications 1 à 7.

11. Poudre comprenant en volume 99 à 65% d'au moins un polymère thermoplastique et 1 à 35% de billes d'un matériau conservant sa forme initiale aux températures de mise en oeuvre pour obtenir le revêtement d'un objet par fusion du polymère thermoplastique provoquant sa filmification.
